# FASCICULE DE BREVET EUROPEEN

(11) **EP 4 537 927 B1**
(45) Date de publication et mention de la délivrance du brevet: **26.08.2026**
(21) Numéro de dépôt: 24205478.1
(22) Date de dépôt: 09.10.2024
(51) Int. Cl.: B01D 53/86, H01F 27/14

(54) **TRANSFORMATEUR ELECTRIQUE PERMETTANT LE TRAITEMENT DES GAZ DE COMBUSTION PRODUITS LORS DE LA REACTIVATION DU MATERIAU ADSORBANT - PROCEDE ASSOCIE**
ELEKTRISCHER TRANSFORMATOR MIT MITTELN ZUR BEHANDLUNG VON ABGASEN, DIE BEI DER REAKTIVIERUNG VON ADSORPTIONSMATERIAL HERGESTELLT WERDEN UND ENTSPRECHENDES VERFAHREN
ELECTRIC TRANSFORMER ALLOWING FOR THE TREATMENT OF COMBUSTION GASES PRODUCED DURING THE REACTIVATION OF ADSORBENT MATERIALS AND ASSOCIATED METHOD

(30) Priorité: 10.10.2023 FR 2310811
(43) Date de publication de la demande: 16.04.2025
(73) Titulaire: Arras Maxei, 62118 Monchy le Preux (FR)
(72) Inventeur: GHERDAOUI, Chems Eddine, 62118 Monchy-le-Preux (FR); DELBARRE, Jean-Philippe, 62118 Monchy-le-Preux (FR); DEBIAK, Richard, 62118 Monchy-le-Preux (FR); SANSANO, Roger, 62118 Monchy-le-Preux (FR); HUTIN, Olivier, 62118 Monchy-le-Preux (FR)
(74) Mandataire: RVDB

(56) Documents cités:
- EP-A1- 0 504 476
- EP-B1- 0 790 290
- EP-B1- 2 024 038
- US-A1- 2012 141 351

## Description

### Domaine technique

La présente invention concerne un transformateur électrique permettant de traiter les gaz de combustion produits par la réactivation thermique du matériau adsorbant qui sert à la régénération de l'huile isolante circulant dans le transformateur. La présente invention concerne également un procédé associé.

### Art Antérieur

A l'heure actuelle la régénération conventionnelle des huiles isolantes des transformateurs de puissance est constituée de deux traitements : le dégazage sous vide, qui permet l'élimination des gaz dissous en même temps que l'eau présente dans l'huile et la filtration des composés acides avec des colonnes dites de régénération de l'huile. Ces colonnes de régénération sont remplies d'un matériau adsorbant solide désigné par le terme général de « terre à foulon ». Ce matériau adsorbe préférentiellement les composés oxygénés éliminant ainsi la majorité des composés acides et soufrés responsables de la dégradation de l'huile isolante.

Lorsque le matériau adsorbant est saturé, il est ensuite réactivé par un procédé de réactivation thermique qui permet de le réutiliser plusieurs centaines de fois. Cette réactivation est réalisée par calcination des composés organiques adsorbés à une température de 250 à 700°C. Cette méthode de réactivation produit des fumées toxiques dont le traitement avant rejet à l'atmosphère est impératif. La colonne de régénération comporte donc des moyens de chauffage (résistances) permettant de chauffer le volume de matériau adsorbant qu'elle contient afin de brûler les composés organiques adsorbés ; la colonne de régénération de l'huile sert donc également à la réactivation du matériau adsorbant.

A l'heure actuelle, la plupart des transformateurs comportent une unité de régénération d'huile laquelle est équipée de filtres à charbon actif qui filtrent les gaz produits lors de la réactivation du matériau adsorbant. Ces filtres ne sont pas sélectifs, saturant rapidement en présence de quantités importantes de gaz produits. Ils s'avèrent insuffisamment efficaces et ne permettent pas de respecter la réglementation en termes de particules solides émises ainsi que de concentrations en monoxyde de carbone, oxydes d'azote et/ou de soufre.

Il est connu la demande de brevet américain US20120141351A1, qui divulgue un appareil de récupération des huiles usagées qui peut être configuré pour être associé de manière opérationnelle à un transformateur électrique afin de récupérer les huiles usagées dans le transformateur. Les composés organiques volatils libérés dans l'appareil de récupération des huiles usagées peuvent d'abord être chauffés, puis passer à travers un oxydateur catalytique dans l'appareil configuré pour contrôler l'émission de composés organiques volatils, et les composés organiques volatils sont convertis en produits gazeux exempts de composés organiques volatils à un degré sélectionné.

Il est aussi connu le brevet européen EP2024038B1 et la demande de brevet européen EP0504476A1.

### Résumé de l'invention

Un but de la présente invention est de proposer un procédé de régénération de l'huile d'un transformateur électrique qui permet le traitement des gaz et éventuelles particules produits lors de la réactivation thermique du matériau adsorbant solide ayant servi à la régénération de l'huile.

Un autre but est de proposer un procédé tel que précité qui respecte la législation en vigueur quant aux teneurs en particules, monoxyde de carbone, oxydes de soufre, éventuellement oxydes d'azote et COV (COVt, COVnm et COVm) des gaz rejetés. Un autre but de l'invention est de proposer un transformateur électrique qui respecte la règlementation en vigueur quant à la sécurité de travail et la pollution de l'air.

Selon la revendication 1, la présente invention concerne un transformateur électrique du type comportant :
- un circuit de refroidissement dans lequel circule une huile isolante ;
- une unité de régénération de ladite huile qui comprend au moins une colonne de régénération remplie d'un matériau adsorbant solide apte à adsorber des composés organiques oxygénés et/ou soufrés contenues dans ladite huile, ladite colonne de régénération présentant une entrée et une sortie et comportant des moyens de chauffage dudit matériau adsorbant, lesdits moyens de chauffage étant configuré pour réactiver thermiquement ledit matériau adsorbant en provoquant la combustion des composés organiques oxygénés et/ou soufrés.

Selon l'invention, ladite unité de régénération comporte, en outre :
- un premier séparateur gaz/liquide monté en sortie de ladite colonne de régénération et configuré pour réaliser une séparation liquide/gaz des gaz produits lors de la réactivation dudit matériau adsorbant, ledit premier séparateur gaz/liquide comprenant une sortie gaz et une sortie condensat ;
- un réacteur catalytique contenant au moins un premier catalyseur apte à oxyder le monoxyde de carbone et les composés organiques volatils et au moins un second catalyseur apte à réduire les oxydes de soufre et/ou d'azote, l'entrée dudit réacteur catalytique étant connectée à ladite sortie de ladite colonne de régénération, la sortie gaz dudit séparateur gaz/liquide étant connectée à une entrée dudit réacteur catalytique en sorte de faire passer lesdits gaz produits dans ledit au moins un premier catalyseur et dans l'au moins un second catalyseur ; et
- un filtre à particules dont une entrée est connectée à une sortie dudit réacteur catalytique et une sortie est connecté à l'atmosphère.

Les catalyseurs précités peuvent être des catalyseurs utilisés pour le traitement des gaz d'échappement des véhicules automobiles. Le mérite des inventeurs et d'avoir constaté que les gaz émis n'étaient pas conformes à la réglementation. Par ailleurs, dans le cas d'un véhicule automobile, il n'existe pas trois régimes de production de gaz qui varient en débit et en nature chimique, comme c'est le cas lors de la réactivation d'un matériau adsorbant du type terre à foulon, par exemple. Il n'était donc pas évident d'utiliser des catalyseurs contenus dans des pots catalytiques de véhicule automobile pour traiter les gaz précités. Par ailleurs, les inventeurs ont également constaté que les réactions catalytiques pouvaient avoir lieu aux températures existantes en sortie de colonne de régénération lorsque cette dernière est utilisée pour la réactivation du matériau adsorbant qu'elle contient.

Avantageusement, ladite unité de régénération de l'huile comporte un premier séparateur gaz/liquide monté en sortie de ladite colonne de régénération et éventuellement un séparateur gravitaire monté sur la sortie condensat dudit premier séparateur gaz/liquide, la sortie gaz dudit premier séparateur gaz/liquide étant connectée à l'entrée dudit réacteur catalytique. C'est le mérite des inventeurs que d'avoir constaté que lors de la réactivation thermique du matériau adsorbant contenu dans la colonne de régénération, les gaz en sortie de colonne de régénération contiennent de l'eau sous forme de gouttelettes, formées par la combustion des composés adsorbés et encore une petite proportion d'huile sous forme liquide également. L'eau et l'huile forment un azéotrope. Le fait de condenser l'eau et l'huile permet de préserver les catalyseurs et d'obtenir un meilleur rendement pour les réactions catalytiques. L'huile peut ensuite être séparée de l'eau en phase liquide par séparation de phase, l'huile surnageant sur l'eau. L'huile surnageante est stockée dans une cuve tampon laquelle est reliée au réservoir d'huile du transformateur. Avantageusement, ladite unité de régénération de l'huile comporte également un deuxième séparateur gaz/liquide du type filtre à coalescence, monté en amont dudit réacteur catalytique.

Avantageusement, quel que soit le mode de réalisation, l'unité de régénération comprend, en outre, un réchauffeur monté en amont dudit réacteur catalytique et en aval de la sortie gaz dudit premier ou dudit deuxième séparateur gaz/liquide, lorsque l'unité de régénération comporte deux séparateurs gaz/liquide. Ce réchauffeur permet d'obtenir la température optimale pour la catalyse des composés produits par la réactivation du matériau adsorbant.

Quel que soit le mode de réalisation, l'unité de régénération de l'huile peut comporter, en outre, des moyens d'aspiration (une ou plusieurs pompes à vide), montés en amont dudit réacteur catalytique et connectés à la sortie de ladite colonne de régénération. Ces moyens d'aspiration permettent de créer un vide partiel qui aspire les gaz hors de la colonne de régénération et permet la formation d'un mélange homogène quand de l'air ou de l'oxygène est mélangé avec les gaz de combustion. La pression dans le réacteur catalytique et dans le filtre à particules n'est pas la même que celle créée dans les colonnes ; elle est par exemple supérieure ou égale à 700 mbar absolu et inférieure ou égale à 850 mbar absolu dans les colonnes, cette pression augmente dans le réacteur catalytique et le filtre à particules elle est par exemple supérieure ou égale à 1013 mbar et inférieure ou égale à 1213 mbar dans ces derniers.

La pompe à vide aspire les gaz chargés en huile et humidité sortant des colonnes de régénération. Ce mélange azéotropique passe par le séparateur liquide /gaz pour condenser l'eau présente dans les gaz et ensuite à travers le filtre à coalescence pour éliminer les traces d'huile et d'eau restantes, avant de passer dans la pompe à vide, laquelle refoule les gaz secs dans le réacteur catalytique.

Le matériau adsorbant n'est pas limité selon l'invention. Il peut être choisi parmi les argiles, la bauxite, bentonite, l'attapulgite, le kaolin, et la montmorillonite de calcium et leurs mélanges. De préférence, le matériau adsorbant contient en masse au moins 70% d'oxyde d'aluminium (Al₂O₃) et de préférence au moins 78% d'oxyde d'aluminium. De préférence il contient 95% ou moins d'oxyde d'aluminium. De manière préférée, le matériau adsorbant peut présenter la composition suivante, en pourcentages massiques : SiO₂ : 2,75%, TiO₂ : 0,33%, Fe₂O₃ : 3,99%, Al₂O₃ : 92,5 % MgO : 0,05%, Na₂O : 0,03%. Le matériau adsorbant peut également contenir de l'oxyde de calcium. Le matériau adsorbant résiste à la chaleur et notamment à la température de combustion des composés adsorbés. Il peut par exemple perdre de 5 % à 6,32% en masse lorsqu'il est chauffé à 1000°C pendant 60 min.

L'unité de régénération peut contenir deux deuxièmes catalyseurs. Le nombre de catalyseurs dépend du type de catalyseur (volume, nature, porosité...) et du volume de gaz de combustion à traiter. L'Homme du Métier est à même de dimensionner le réacteur catalytique en fonction des catalyseurs utilisés.

Le type de catalyseur n'est pas limité selon l'invention. Il peut s'agir, par exemple, pour les deux catalyseurs, d'un catalyseur qui comporte un support solide et poreux formant un bloc sur lequel est déposé un matériau catalytique contenant un métal du groupe platine, en particulier, du platine, du palladium ou un mélange palladium et platine. Le support peut contenir au moins un oxyde métallique choisi dans le groupe constitué par l'alumine éventuellement stabilisée, le titanium de caractère acide éventuellement stabilisé (ce qui diminue la formation de sulfates, la capacité de stockage du SO₂ et favorise la réactivation du catalyseur), un oxyde mixte d'oxyde de cérium-titanium et/ou un oxide mixte cérium-zirconium éventuellement stabilisé (caractère réducteur, augmente la capacité de stockage O₂) et les mélanges de deux quelconques ou plus de ceux-ci, et une composition comprenant la silice et/ou l'oxyde de silicium (stabilité thermique).

Le filtre à particules n'est pas limité selon l'invention. Il peut être en céramique. Il doit dans tous les cas permettre la filtration des matières particulaires (PM1, PM2.5, PM5, PM10) engendrées par la combustion.

Avantageusement, ledit filtre à particule comporte au moins un métal du groupe du platine, notamment du platine ou du palladium ou un mélange palladium et platine. La présence de ce métal permet d'augmenter la température dans le filtre à particules et de le régénérer plus facilement par la suite. En effet, le métal précité peut engendrer la combustion des particules filtrées ; le filtre est ainsi capable de s'auto réactiver/s'autorégénérer.

Avantageusement, l'unité de régénération peut comporter des moyens d'admission d'un débit réglable d'air ou d'oxygène montés en amont dudit réacteur catalytique et en aval de ladite colonne de régénération et/ou montés à l'entrée de ladite colonne de régénération. Lorsqu'ils sont montés en amont dudit réacteur catalytique, ils sont montés en amont des moyens d'aspiration, en amont dudit deuxième séparateur gaz/liquide, en amont du réchauffeur et en aval dudit premier séparateur gaz liquide. La dilution des gaz de combustion facilite la réaction catalytique et permet d'ajuster le débit quand le débit de gaz de combustion varie en fonction du régime et de l'avancement de la réaction de combustion.

La colonne de régénération peut contenir en dessous de la couche de matériau adsorbant une couche d'alumine et un filtre en graphite. La couche d'alumine qui résiste bien à la chaleur protège le matériau adsorbant en absorbant la chaleur excessive, la couche de graphite filtrante permet la rétention dans la colonne de régénération des fines provenant du matériau adsorbant.

Avantageusement, l'unité de régénération peut comporter des moyens d'ajustement de la distance séparant la sortie de ladite colonne de réactivation thermique et l'entrée dudit réacteur catalytique et/ou des moyens d'ajustement de la distance séparant la sortie dudit réacteur catalytique et l'entrée dudit filtre à particules. Ces moyens d'ajustement peuvent être par exemple des conduites de circulation dérivées plus ou moins longue et équipées de vannes de manière à pouvoir être fermées. Lorsque les gaz passent par ces conduites plus longues, dont la paroi est en contact avec l'air atmosphérique, les gaz se refroidissent et atteignent la température la plus adaptée à la réaction catalytique ou à la filtration.

Le transformateur électrique peut également comporter un échangeur de chaleur apte à récupérer la chaleur des gaz en sortie dudit filtre à particules pour réchauffer les gaz entrant dans ledit réacteur catalytique. Une partie de l'échangeur de chaleur peut faire office de réchauffeur.

Le réacteur catalytique peut également comporter d'autres blocs catalytiques, par exemple un bloc catalytique permettant la réaction de Fischer-Tropsch ou un bloc catalytique permettant la réaction de Sabatier ; dans ce cas, une source d'hydrogène peut également être connectée au réacteur catalytique.

L'huile n'est pas limitée selon l'invention. Il peut s'agir d'une huile minérale qui contient majoritairement un mélange de paraffines, naphtènes, d'aromatiques et d'alcènes. La présente invention concerne également un procédé de régénération de l'huile isolante contenue dans un transformateur électrique sur au moins une colonne contenant un matériau adsorbant selon lequel on réactive thermiquement ledit matériau adsorbant en provoquant la combustion des composés organiques oxygénés et/ou soufrés adsorbés sur ledit matériau adsorbant, défini dans la revendication 9. De manière caractéristique, selon l'invention, on réalise une séparation liquide/gaz des gaz produits lors de la réactivation dudit matériau adsorbant et ensuite on fait passer lesdits gaz sur au moins un premier catalyseur et sur au moins un second catalyseur de manière à transformer les composés organiques en dioxyde de carbone, oxyder le monoxyde de carbone en dioxyde de carbone et réduire les oxydes d'azote et/ou de soufre formés et l'on filtre ensuite les particules solides contenues dans lesdits gaz.

Avantageusement, on réchauffe lesdits gaz avant leur passage sur ledit catalyseur et en particulier en ce que l'on réchauffe lesdits gaz au moins partiellement avec la chaleur des gaz filtrés.

Avantageusement, on dilue lesdits gaz produits avec de l'air ou de l'oxygène avant la séparation gaz/liquide et/ou pendant la réaction catalytique.

Avantageusement, ledit catalyseur comprend un métal du groupe du platine, en particulier du platine, du palladium ou un mélange de platine et de palladium. Avantageusement, on filtre lesdits gaz sur un filtre contenant un catalyseur contenant un métal du groupe platine et notamment du platine.

Selon un mode de mise en œuvre préféré, la vitesse volumique horaire des gaz entrant dans ledit catalyseur est supérieure à 20 et inférieure à 100 kh⁻¹, lesdits gaz entrant dans ledit catalyseur étant dilués de 20 à 50 % en volume avec de l'air et chauffé à une température supérieure ou égale à 300°C, ledit au moins un catalyseur contenant une concentration en platine ou platine et palladium supérieure ou égale à 0,5 et inférieure ou égale à 4g/l de catalyseur

Avantageusement, on aspire lesdits gaz en créant une pression supérieure ou égale à 700 mbar absolu et inférieure à la pression atmosphérique avant de les faire passer sur ledit au moins un catalyseur. Si le vide est plus poussé, la réaction catalytique n'a pas lieu. Ce vide permet également le mélange des gaz et leur circulation hors de la colonne de régénération.

Toutes les informations relatives aux catalyseurs, matériau adsorbant et filtre s'appliquent pour l'installation et le procédé indifféremment.

Le procédé de l'invention permet de traiter les fumées/gaz contenant au moins 100 ppm de monoxyde de carbone (CO), 30 ppm de composés organiques volatils (COVNM), 100 ppm d'oxydes d'azote (NOx), 50 ppm des oxydes de soufres (SOx) engendrés par la réactivation de la bauxite (matériau adsorbant utilisé pour la réactivation des huiles de transformateur) saturée par les composés adsorbés provenant de l'huile traitée.

Comme déjà cité, les huiles traitées (régénérées) peuvent être des huiles minérales, synthétiques ou végétales.

Le procédé selon l'invention permet en parallèle le traitement des matières particulaires fines de type PM1 ; PM2.5 ; PM5 ; PM10.

L'étape de catalyse est avantageusement effectuée dans une plage de température allant de 250 °C à 350 °C, de préférence de 300 °C à 350 °C.

La filtration est avantageusement mise en œuvre à une température de 350°C.

En tant que catalyseur, on peut utiliser un seul type de substrat monolithique ou différents types de substrat monolithique comprenant au moins un métal du groupe du platine (PGM) et un métal disposant de platine, les catalyseurs étant placés en série. La distance entre le substrat monolithique catalytique et le filtre doit être entre 0.3 m et 1 m, de préférence de 0.3 m à 0.5 m.

La dilution du gaz et/ou des gaz de combustion par l'air s'effectue entre 35 % et 100 %.

Le dimensionnement s'effectue avec le paramètre de la vitesse volumique horaire (VVH) qui s'exprime en (h⁻¹) et qui se définit par le rapport entre le débit des gaz Q en (m³/h) et le volume du catalyseur V en (m³). La valeur de la VVH doit être entre 20 k h-1 et 100 k h⁻¹.

Un bon dimensionnement du catalyseur permet une efficacité de traitement meilleure. La méthode a été validée industriellement pour un gaz seul et/ou des gaz en mélange contenant initialement du CO, des COVNM/COVM du SOₓ, des NOₓ et de la matière particulaire.

La variation des paramètres opératoires permet d'optimiser le procédé d'invention. Les paramètres sont notamment la distance entre le catalyseur et les colonnes de régénération, la distance entre le catalyseur et le filtre à particule, le temps de chauffage en amont et aval du catalyseur, la filtration d'huile et/ou l'eau en amont du procédé et l'état sec ou humide du catalyseur.

### Définitions

L'acronyme COVT désigne les composés organiques volatils totaux.

L'acronyme COVnm désigne les composés organiques volatils non méthaniques.

L'acronyme COVm désigne les composés organiques volatils méthaniques, c'est-à-dire le méthane et ses dérivés.

Le terme « bauxite » désigne un mélange solide à l'état divisé contenant dans des proportions variables des hydrates d'alumine, de la kaolinite, de la silice et des oxydes de fer III.

Les termes « vitesse volumique horaire » exprimée en h⁻¹ désignent le rapport du débit de gaz (m³/h) sur le volume de catalyseur (m³).

### Figures

La présente invention est définie dans les revendications indépendantes, ses caractéristiques et les divers avantages qu'elle procure apparaitront mieux à la lecture de la description des exemples qui suivent et des figures annexées, présentée à titre d'exemples illustratifs et non limitatifs.
La [Fig.1] représente de manière schématique un mode de réalisation particulier de l'installation selon la présente invention ;
La [Fig. 2] représente un mode de réalisation particulier du réacteur catalytique de l'installation de la Fig. 1.

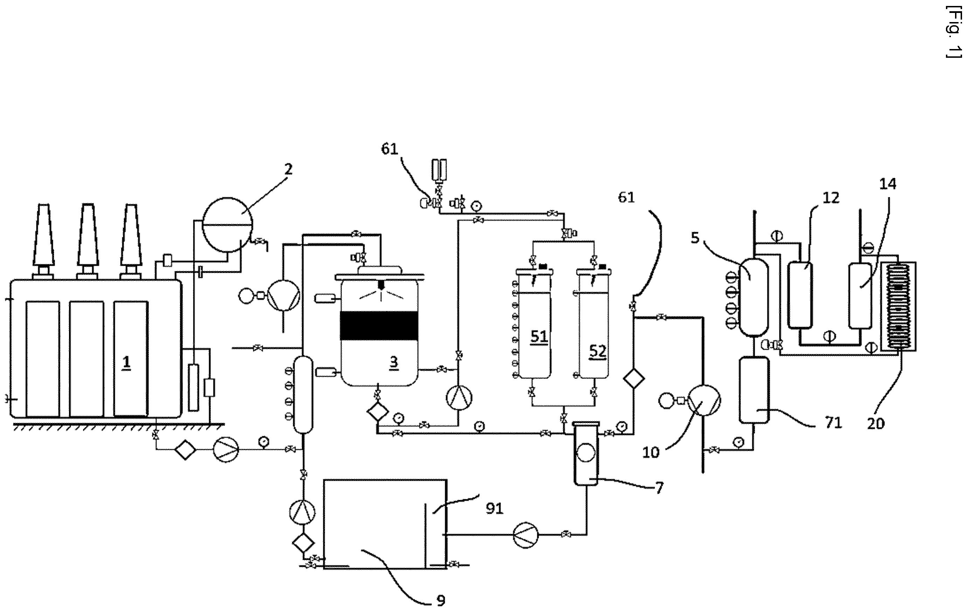

En référence à la Fig. 1, le transformateur de l'invention comporte une unité de production d'électricité 1, dans laquelle circule de l'huile qui sert de fluide caloporteur. L'huile provient d'un réservoir 2. Le transformateur comporte une unité de régénération de l'huile. Celle-ci comporte un dégazeur 3 qui permet de séparer l'huile de l'eau et de l'air qu'elle contient et deux colonnes de régénération 51 et 52. Chaque colonne 51 et 52 contient un matériau adsorbant et est équipée de résistances permettant de chauffer le volume de matériau adsorbant. Les colonnes de régénération de l'huile 51 et 52 sont montées en parallèle. L'unité de régénération de l'huile comporte également un séparateur gaz/liquide 7. La sortie liquide du séparateur 7 est reliée à un réservoir tampon 9 dont une partie 91 sert de séparateur de phase. La sortie gaz du séparateur 7 est connectée à une pompe à vide 10. La sortie de la pompe à vide 10 est connectée à un filtre à coalescence 71 qui permet de condenser l'eau et l'huile sous forme de gaz encore présentes dans le flux gazeux. Un préchauffeur 5 est monté en aval du filtre à coalescence 71. La sortie du préchauffeur 5 est connectée à l'entrée du réacteur catalytique 12. La sortie du réacteur catalytique 12 est connectée à un filtre à particules 14. Un échangeur de chaleur 20 est thermiquement connecté au filtre à particules 14 et au préchauffeur 5 de manière à récupérer les calories transportées par les gaz sortant du transformateur de l'invention pour les amener au réchauffeur 5. Une vanne à débit réglable 61 permet d'introduire de l'air dans les colonnes de réactivation 51 et 52, lors de l'incinération des composés adsorbés sur le matériau adsorbant qu'elles contiennent. Sur la Fig. 1, une vanne à débit réglable 61 est également disposée en amont de la pompe à vide et en aval du premier séparateur gaz/liquide 7. Cette deuxième vanne est optionnelle. Elle peut remplacer la vanne 61 montée en entrée des colonnes de régénération 51 et 52, venir s'ajouter à cette dernière ou ne pas être présente. La pompe à vide 10 permet de créer une pression supérieure ou égale à 700 mbar absolu en aval des colonnes de régénération 51, 52 ; une autre pompe à vide (non représentée) permet de maintenir un vide partiel dans le réacteur catalytique 12 et dans le filtre 14. Le vide dans le réacteur catalytique 12 et le filtre à particules 14 est moins poussé que celui dans les colonnes de régénération 51 et 52.

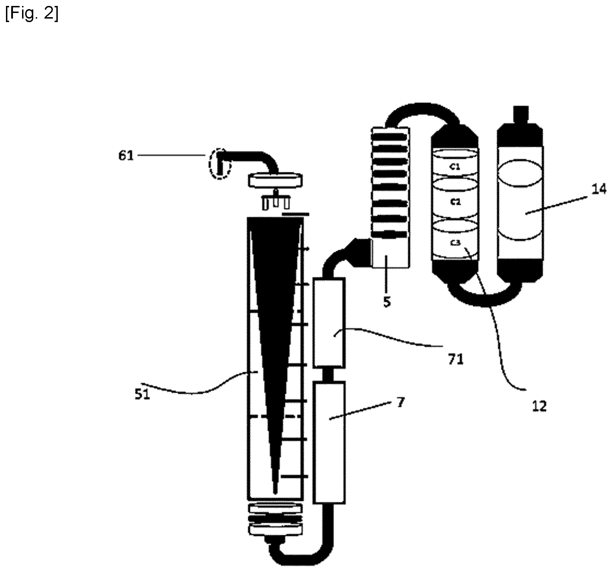

En référence à la Fig. 2, selon un mode de réalisation particulier, le réacteur catalytique 12 contient trois blocs catalytiques C1, C2 et C3 pouvant chacun être traversés par les gaz de combustion. Le premier bloc C1 est un catalyseur apte à réduire les oxydes de soufre ; les deuxième et troisième blocs catalytiques C2 et C3 sont aptes à réduire les oxydes d'azote et oxyder les COVT. Le premier bloc C1 est situé en amont des deux autres blocs, il présente un volume plus petit que celui des deux autres ; il sert, par la réaction qu'il catalyse, à protéger également les deux blocs catalytiques qui sont situés en aval. Les trois blocs sont disposés les uns derrière les autres dans le sens d'écoulement des gaz. Le réacteur peut également contenir en outre, d'autres blocs catalytiques permettant la réaction de Sabatier ou celle de Fischer-Tropsch.

Les trois blocs catalytiques poreux comprennent par exemple un support contenant, au moins un oxyde métallique choisi dans le groupe constitué par l'alumine éventuellement stabilisée, le titanium éventuellement stabilisée (diminue la formation de sulfates et favorise leurs régénération), un oxyde mixte d'oxyde de cérium-titanium et/ou un oxide mixte cérium-zirconium éventuellement stabilisé (caractère réducteur, augmente la capacité de stockage O₂) et les mélanges de deux quelconques ou plus de ceux-ci ; et une composition comprenant la silice et/ou l'oxyde de silicium (stabilité thermique). Le filtre à particules 14 peut être en céramique qui permet l'abattement des matières particulaires (PM1, PM2.5, PM5, PM10) engendrées par la combustion des huiles adsorbées sur le matériau adsorbant.

Dans un transformateur, l'unité de traitement de l'huile est composée de 1 à 15 colonnes voir plus avec un maximum de 30 colonnes (exemple de disposition unité 15 colonnes : 3 rangées de 5 colonnes) contenant le matériau adsorbant (bauxite ou argile en général). L'huile est répartie sur ces colonnes par un système de conduits équipés d'électrovannes, chaque colonne de réactivation thermique contient une quantité totale de 110 Kg de matériau adsorbant à régénérer.

Les colonnes de régénération 51 et 52 possèdent également des capteurs de température pour mesurer la progression pendant la réactivation du matériau adsorbant.

L'huile usagée est filtrée par le matériau adsorbant en une ou plusieurs passes. Lorsque le degré de saturation du matériau est atteint, le processus de réactivation thermique doit être lancé. La vanne 61 d'alimentation en air assure une combustion homogène dans chaque colonne de régénération 51, 52.

Un exemple de procédé selon l'invention va maintenant être décrit en référence aux figures 1 et 2. Les colonnes 51 et 52 sont saturées de composés organiques oxygénés et soufrés provenant de l'huile du transformateur. On chauffe le matériau adsorbant contenu dans les colonnes 51 et 52 de manière à initier la combustion des composés adsorbés. Une fois libérés du site actif de l'adsorbant, les gaz de combustion qui contiennent de l'eau et de l'huile (sous forme de gouttelettes) sont entrainés par la pompe à vide 10 vers le réacteur catalytique. Les gaz passent d'abord à travers le séparateur gaz/liquide 7. Dans ce dernier, les gouttelettes d'eau et d'huile se séparent de la phase gaz. Le mélange huile/eau liquide est envoyé dans le réservoir tampon 9. Le mélange s'accumule d'abord dans la partie 91 de ce dernier, laquelle fait office de séparateur de phase. L'huile plus légère va se déverser progressivement dans le réservoir tampon 9 pour être ensuite recyclée vers l'unité de production d'électricité 1. Les gaz aspirés par la pompe à vide 9 transversent tout d'abord un filtre à coalescence 71 qui permet la condensation de l'eau et de l'huile résiduelles. Les gaz de combustion sont ensuite réchauffés par le réchauffeur 5 puis entrent dans le réacteur catalytique 12. Dans le réacteur catalytique 12, le monoxyde de carbone provenant de la combustion incomplète des composés adsorbés est oxydé en dioxyde de carbone. Les COVT sont oxydés en dioxyde de carbone et eau et les oxydes de soufre et d'azote sont réduits en soufre et azote. Ces réactions chimiques ont lieu sur les différents blocs catalytiques C1, C2 et C3 contenus dans le réacteur catalytique 12. Les gaz issus du réacteur catalytique 7 passent ensuite sur le filtre à particules 14 ; lors du passage dans le filtre à particules 9, les gaz cèdent de la chaleur à l'échangeur thermique 2, lequel va apporter les calories ainsi récupérées au réchauffeur 5.

### EXEMPLES EXPERIMENTAUX

### Exemple 1 : Effet du traitement catalytique sur le mélange gazeux à traiter contenant du monoxyde de carbone (CO) et du propylène (C₃H₆)

Les mélanges de gaz de combustion contenant en volume 13 % d'O₂, 4 % de CO₂, 0 ou 6 % de H₂O, 0,1 % de C₃H₆ (représente les COVNM dans cet exemple) et du N₂ comme complément, ont été traités avec un catalyseur comprenant un support en alumine recouvert de platine. Dans cet exemple la VVH (vitesse volumique horaire) est de 70 kh⁻¹ et la température finale est entre 320 °C et 350 °C.

L'efficacité de conversion catalytique % CE (Eq.1) d'un polluant est définie, avec Cin et Cout les concentrations du polluant respectivement en entrée et sortie de catalyseur, telle que : $% CE = \left(\left(Cin-Cout\right)/Cin\right) * 100$

L'efficacité peut se définir également avec la température d'amorçage (T50), qui est par définition, la température des gaz à traiter pour laquelle une conversion des polluants de 50% est obtenue au cours d'une expérimentation lors de laquelle la température est variable.

La T50 est facilement dépassée dans le catalyseur puisque les réactions catalytiques sont exothermiques. La T50 constitue par ailleurs un critère caractérisant l'activité du catalyseur ; la T50 augmente lorsque le catalyseur vieilli et que ses caractéristiques (surface spécifique, porosité, dispersion des sites actifs...) se dégradent.

La détermination de la température d'amorçage a été réalisée sur la BGS (Banc de gaz synthétique) mais aussi à l'échelle industrielle sur une machine de réactivation huile minérale.

Le but des tests mis en œuvre est de déterminer les conditions limites du bon fonctionnement du dispositif de l'invention en fonction de la température des gaz traités, des débits de gaz traités et de la composition des gaz à épurer.

Le débit du mélange gazeux est fixé, de manière analogue aux tests d'amorçage. Pour avoir une VVH entre 20 et 100 kh⁻¹, à savoir une VVH maximum qui ne doit pas être atteinte dans les conditions du procédé sur le système de 12 colonnes de bauxite. Le protocole de vieillissement accéléré du catalyseur mis en place a pour but de représenter l'état du catalyseur en fin de vie des colonnes de bauxite, c'est-à-dire après 300 cycles de réactivation des colonnes de terre, à raison de 6 à 8 h de brûlage par régénération. Ceci représente donc un fonctionnement de l'installation de 1800h à 2400h à des températures évaluées autour de 500°C-550°C. A de telles températures et en présence d'humidité, le catalyseur se désactive par différents processus activés thermiquement (frittage du support, frittage des métaux, encapsulation des métaux, diffusion des métaux, changement de phase du support impliquant ainsi une diminution de surface spécifique, porosité.

Un vieillissement hydrothermal accéléré, HTA (hydrothermal aging), d'au moins un catalyseur a donc été réalisé en soumettant le catalyseur à des températures plus élevées que son utilisation ordinaire et sous une atmosphère oxydante et humide. Le traitement HTA suivant a été appliqué à un catalyseur comprenant du platine déposé sur une base d'alumine : 850°C sous air humide à 10%v/v en H₂O durant 5h. Pour cela, le catalyseur est placé sous flux dans un four tubulaire. Ce protocole peut être considéré comme un vieillissement dur. En effet, la température de 850°C correspond à la température charnière de changement de la phase de l'alumine y en alumine δ. D'autre part, la présence de vapeur d'eau favorise particulièrement le frittage de l'alumine.

Les températures d'amorçage du catalyseur précité neuf obtenus pour le CO et C₃H₆ individuellement ou en mélange ensemble sont rassemblées dans le Tableau 1. Trois essais ont été réalisés pour chaque polluant considéré seul et dans le mélange de polluants.

**[Tableau 1]**

| | | Système catalytique neuf | | | | Système catalytique vieillis | | | |
|---|---|---|---|---|---|---|---|---|---|
| | | T50 - gaz secs (°C) | | T50 - gaz humides (°C) | | T50 - gaz secs (°C) | | T50 - gaz humides (°C) | |
| | | CO | C₃H₆ | CO | C₃H₆ | CO | C₃H₆ | CO | C₃H₆ |
| Mélange | 1^{er} | 214,0 | 209,0 | 213,0 | 210,0 | 265,0 | 265,0 | 265,0 | 258,0 |
| | 2^{ème} | 213,0 | 210,0 | 215,0 | 214,5 | 269,0 | 265,0 | 264,0 | 258,0 |
| | 3^{ème} | 210,5 | 208,0 | 215,0 | 212,5 | 267,0 | 265,0 | 264,5 | 258,0 |
| | *moyenne* | 212,5 | 209,0 | 214.5 | 212,3 | 267,0 | 265,0 | 264,5 | 258,5 |
| Polluant seul | 1^{er} | 193,0 | 182,0 | 191,5 | 180,0 | 222,0 | 226,0 | 219,0 | 240,0 |
| | 2^{ème} | 194,0 | 182,0 | 191,5 | 178,0 | 220,0 | 226,0 | 219,0 | 241,5 |
| | 3^{ème} | 193,0 | 182,0 | 191,5 | 182,0 | 221,0 | 226,0 | 219,0 | 143,0 |
| | *moyenne* | 193,3 | 182,0 | 191,5 | 180,0 | 221,0 | 226,0 | 219,0 | 241,5 |

Les T50 obtenues pour les 2 polluants en mélange sont similaires, se situant autour de 210 -215°C, et ne sont pas significativement influencées par l'humidité des gaz comme l'illustre le Tableau 1. Par ailleurs, une très bonne répétabilité des mesures est obtenue pour un catalyseur donné (écarts < 6°C).

Concernant les tests réalisés avec un seul polluant, ils montrent des températures d'amorçage plus faibles d'environ 20-25°C pour CO (-190-195°C) et 30-35°C pour le C₃H₆ (180-183°C). On n'observe pas de différence significative entre les T50 obtenues pour des gaz secs et humides. Cette diminution de la T50 lorsqu'un seul polluant est présent dans les gaz est bien connue et correspond à une diminution de compétition d'adsorption et inhibition des sites actifs. En effet, les sites actifs adsorbants CO, C₃H₆ et O₂, des concentrations plus élevées en polluants conduisent à inhiber des sites et ralentir la réaction catalytique. On retiendra que le taux d'humidité des gaz traités (0%v/v et 6%v/v) ne joue pas de rôle significatif sur la température d'amorçage et que les mesures effectuées sont très répétables d'un test à l'autre.

Dans le cas du catalyseur vieilli, lorsque les polluants sont en mélange, leurs T50 se situent autour de 265°C. Il n'est pas observé de différence nette entre des gaz secs et humides pour le CO. En revanche, le propylène présente une T50 légèrement plus faible de 6-7°C avec de l'humidité. Comparativement à un catalyseur neuf, le traitement HTA à un impact majeur sur l'activité catalytique conduisant à une hausse très conséquente de près de 50-55°C comme l'illustre le tableau 1.

S'agissant des T50 obtenues avec l'injection d'un polluant unique, elles sont nettement plus basses. Pour le CO, la T50 est autour de 220°C aussi bien en gaz secs que humides, ce qui représente une diminution de -45°C à -55°C par rapport à la T50 en mélange. Pour le propylène, des T50 plus élevées que celles pour le CO sont obtenues indiquant que l'amorçage de la catalyse des hydrocarbures est plus difficile. En effet, les T50 diminuent d'environ 30°C (226°C à 246°C). Comparativement à un catalyseur neuf (Tableau 1). Le traitement HTA conduit à rehausser les T50 des polluants injectés individuellement d'environ 28°C pour le CO et 50°C pour le propylène, montrant à nouveau que le vieillissement HTA impacte davantage la conversion des COVNM. Enfin, l'impact du vieillissement hydrothermal accéléré mis en évidence, se caractérise par une dégradation de plus de 50°C de la T50 du catalyseur pour le mélange CO-propylène, soit des valeurs de 265°C-275°C.

On en déduit que la séparation gaz/liquide qui est opérée avant la phase catalytique permet de réduire la teneur en eau des gaz traités sur le catalyseur. Cet assèchement des gaz permet de réduire les températures d'amorçage ce qui conduit à une meilleure performance énergétique de l'installation de l'invention.

### Exemple 2 : Effet du traitement catalytique sur un mélange gazeux à traiter contenant, monoxyde de carbone (CO), des composés organiques volatiles méthaniques (COVM) et des composés organiques volatiles non méthaniques (COVNM) en conditions réelles

Les mélanges traités dans cet exemple ont été engendrés par la réactivation thermique (combustion) de bauxite saturée par les composés adsorbés provenant d'une huile minérale utilisée comme fluide caloporteur dans des transformateurs électriques. Le mélange gazeux produit contient de 6 à 21 % d'O₂, 3 à 8 % de CO₂, 0 ou 6 % de H₂O, ~ ≥ 20000 ppm de CO, ~ ≥ 10 000 ppmC de COV(NM/M) et du N₂ comme complément. Le mélange gazeux a été traité selon le procédé de l'invention sur une installation selon l'invention comme décrite en référence à la Fig. 1. Dans cet exemple la VVH est entre 40 et 70 kh⁻¹ et la température d'entrée dans le réacteur catalytique est entre 320 °C et 350 °C.

Les analyses ont été réalisées au cours d'un procédé de réactivation de la bauxite dans une colonne qui met en œuvre la combustion des composés adsorbés sur le matériau adsorbant à la suite de la filtration de 2 m³ d'huile présentant une acidité équivalente à 0.3 mg KOH/kg. L'acidité de l'huile reflète son degré de saturation en composés à éliminer et qui sont adsorbés sur le matériau adsorbant.

L'étape de filtration de l'huile a durée -4h et la réactivation des colonnes de matériau adsorbant environ 9h. Le premier catalyseur comporte un substrat monolithique en aluminium de 50mm sur lequel du platine a été déposé. Le réacteur catalytique comporte également deux substrats catalytiques monolithiques en aluminium/céramique de 90mm recouverts de platine. Un préchauffage des catalyseurs logés dans le réacteur catalytique a été mis en œuvre par la mise en route anticipée du réchauffeur.

La réactivation du matériau adsorbant contenu dans les colonnes s'effectue par calcination et se déroule en 3 régimes distinctes, caractérisées par la régulation de l'apport d'air (régulation de la concentration en O₂) et la température dans les fumées.
1) Un 1er régime caractérisé par un démarrage de la combustion (0-45min), par une consommation et donc une diminution du taux en O₂ et augmentation de la température. La combustion se stabilise entre 45 et 180 min avec un taux en O₂ et une composition des fumées également stabilisés. Un plateau à 13% en O₂ est observé en sortie du réacteur catalytique et la température des fumées se fixe autour de 360-380°C,
2) Un 2ème régime stable de combustion plus intense (-180-300min), avec un taux en O₂ plus faible (plateau -10% en sortie catalyseur), une température stabilisée autour 460-480°C et des émissions en polluants plus concentrées.
3) Un 3ème régime correspondant à l'arrêt progressif de la combustion (~ 300-400min), corrélé à la remontée du taux en O₂ jusqu'à 21% et diminution de la température.

Les mesures et prélèvements ont été réalisées durant les trois régimes en amont et en aval du réacteur catalytique. La réactivation du matériau adsorbant est contrôlée par des sondes de températures.

Les trois régimes précités sont définis dans le tableau 2.

**[Tableau 2]**

| Régime | Durée (min) | Apport d'air (%) | O2 (%) |
|---|---|---|---|
| 1 | 45 - 180 | 35 | 11-15 |
| 2 | 180-300 | 45 | 8-11 |
| 3 | 300-400 | 100 | 19-21 |

Les Tableau 3 et Tableau 4 (ci-dessous) présentent les concentrations moyennes des COV, CH₄ et CO ainsi que les minimas et maximas relevés durant l'essai.

**[Tableau 3]**

| | | Régime 1 | | Régime 2 | | Régime 3 | |
|---|---|---|---|---|---|---|---|
| | | Amont | Aval | Amont | Aval | Amont | Aval |
| [CH4] (ppm) | min. | 235 | 3,0 | 80,0 | 1,0 | 60,0 | 1,0 |
| | Max. | 707 | 9,0 | 1049 | 13,0 | 849 | 11,0 |
| | *Moyenne* | *445* | *6,0* | 677 | *9,0* | *566* | *7,0* |
| [COVnm] (ppm) | min. | 1401 | 4,0 | 3343 | 7,0 | 3343 | 3,0 |
| | Max. | 7420 | 5,0 | 11133 | 10,0 | 11133 | 9,0 |
| | *Moyenne* | *4163* | *2,0* | *8519* | *3,0* | *8519* | *2,0* |
| [COVT] (ppm) | min. | 1950 | 1,0 | 3494 | 1,0 | 3494 | 1,0 |
| | Max. | 8120 | 6,0 | 11741 | 9,0 | 8102 | 8,0 |
| | *Moyenne* | *4612* | *2,0* | *10000* | *8,0* | *5265* | *3,0* |
| Efficacité de réduction des COVT CE (%) | *Moyenne* | *99,0* | | *98,5* | | *99,2* | |

La valeur limite à respecter pour les COVnm et les COVT est de 30 ppm.

Le procédé selon l'invention est efficace pour les COVm, COVnm et COVT lors du régime 1 avec un abattement d'environ 98 % de méthane et 97% des COVnm résultant en un abattement de 99 % des COVT. Lors du régime 2 et 3, l'abattement du méthane et les COVnm reste assez stable. Ce qui résulte un abattement de 98,5% et 99,2% des COVT avec des concentrations très faibles en sortie du réacteur catalytique. Les concentrations des COV sont plus basses lors du régime 3 aux trois régimes étudiés.

**[Tableau 4]**

| | | Régime 1 | | Régime 2 | | Régime 3 | |
|---|---|---|---|---|---|---|---|
| | | Amont | Aval | Amont | Aval | Amont | Aval |
| [O2] (%) | min. | 15,9 | 12,4 | 13,3 | 8,7 | 15,6 | 10,0 |
| | Max. | 16,7 | 13,9 | 15,5 | 9,8 | 19,9 | 12.9 |
| | *Moyenne* | *16,3* | *13,0* | *15,4* | *8,3* | *18,7* | *13,0* |
| [CO₂] (%) | min. | 4,3 | 4,5 | 3,5 | 4,2 | 3,0 | 4,1 |
| | Max. | 5,1 | 6,1 | 7,7 | 8,3 | 4,5 | 5,4 |
| | *Moyenne* | *4,7* | *4,0* | *5,6* | *5,7* | *4,1* | *5,3* |
| [CO] (ppm) | min. | 5805 | 0,0 | 7797 | 0,0 | 5649 | 0,0 |
| | Max. | 10828 | 2,0 | 24000 | 4,0 | 9113 | 2,0 |
| | *Moyenne* | *10690* | *1,0* | *20000* | *4,0* | *11610* | *2,0* |
| Efficacité de conversion du CO (%) | *Moyenne* | *99,9* | | *99,8* | | *99,9* | |

La valeur limite à respecter pour le CO est de 100 ppm.

On constate qu'aux trois régimes, le rendement du procédé de l'invention en ce qui concerne le taux de conversion du CO en dioxyde de carbone est supérieur à 99%

Les concentrations en O₂ et CO₂ sont relativement stables au cours des trois premiers régimes ; elles semblent influencées par l'apport d'air introduit pour chaque régime dans la colonne de régénération. Lors du régime 1, la concentration en O₂ en sortie est de 13 % en moyenne. Cette concentration baisse dans les régimes 2 et 3 du fait de l'augmentation du débit global par apport d'air via la vanne à débit réglable 61.

La concentration en CO₂ augmente en sortie lors des trois régimes.

Cette augmentation confirme la conversion des CO en CO₂ en présence d'O₂ sous les conditions décrites. L'installation est efficace et donne des résultats stables avec un abattement du CO de 99,8%.

Les concentrations des CO (figure 1 et tableau 4) et COV (tableau 3) restent relativement minimes ou nulles en sortie de l'installation avec des températures élevées d'environ 550°C dues aux réactions d'oxydation exothermiques des polluants. Les concentrations des CO et COV respectent la législation environnementale en vigueur.

### Exemple 3 : Effet du traitement catalytique sur un mélange gazeux à traiter contenant des oxydes de soufre (SOx) et des oxydes d'azote (NOx)

Les mélanges gazeux traités sont les mêmes que ceux utilisés à l'exemple 2. Ils contiennent 8 à 13 % d'O₂, 4 % de CO₂, 0 ou 6 % de H₂O, 10000 à 20 000 ppm de CO, 10 000 ppm de COVT (mg/m³ eq. toluène), de 50 à 600 ppm de SO_{X} (mg eq.SO₂/Nm³), de 100 ppm NO_{X} (mg eq.NO₂/Nm³) et du N₂ comme complément. Ils ont été traités selon le procédé de l'invention dans l'installation décrite à la FIG. 1. Dans cet exemple, la VVH est de 70 kh⁻¹ et la température finale est entre 320 °C et 350 °C. L'analyse des NO_{X}, SO_{X} a été réalisée avec l'analyseur de gaz de combustion TESTO 350 utilisant des cellules électrochimiques spécifiques. Le prélèvement/échantillonnage est réalisé à un débit de 1l/min avec une canne en acier supportant de fortes températures (jusqu'à 1000°C) et a donc été réalisé directement en amont et aval du catalyseur au moyen d'orifice spécifiquement réalisés. Le flux échantillonné passe au travers d'un condenseur d'eau et de filtres particulaires afin de protéger les cellules. La température des gaz au point de prélèvement est également enregistrée par un thermocouple de type K (NiCr).

Ce type de mesure ne permet plus la réactivation des cellules électrochimiques. Le seuil de détection est de 1 ppm. Le zéro de l'analyseur est réalisé avant les mesures sur l'air ambiant.

Les concentrations mesurées en NOₓ et SOₓ sont résumées dans le tableau 5 au cours des trois régimes de combustion. Les analyses/mesures ont été réalisées en amont et en aval du procédé de l'invention. Lors du régime 1 de combustion, on constate que l'émission des NOₓ et SOₓ représente presque la moitié des deux régimes qui suivent. Les régimes 2 et 3 de combustion stabilisée conduisent aux émissions les plus intenses et stables (régime 3 plus intense). Les oxydes d'azote (NO_{X}) sous forme de NO et NO₂ n'ont pas été détectés en quantités significatives lors des trois régimes. S'agissant du SO₂, des rejets très élevés sont mesurés en amont du système catalyseur alors qu'en aval ils ne sont pas mesurables ou de quelques mg/Nm³ seulement.

**[Tableau 5]**

| | | Régime 1 | | Régime 2 | | Régime 3 | |
|---|---|---|---|---|---|---|---|
| | | Amont | Aval | Amont | Aval | Amont | Aval |
| [SOx] (mg eq.SO₂/Nm³) | min. | 11,0 | 3,0 | 165,0 | 4,2 | 102,0 | 4,2 |
| | Max. | 880,0 | 7,0 | 1500,0 | 8,3 | 1450,0 | 6,3 |
| | Moyenne | 714,0 | < 2,9 | 1428,0 | < 2,9 | 1330,0 | < 2,9 |
| [NOx] (mg eq.NO₂/Nm³) | min. | 2,0 | 0,0 | 5,0 | 0,0 | 12,0 | 0,0 |
| | Max. | 22,0 | 1,0 | 116,0 | 1,0 | 31,0 | 1,0 |
| | Moyenne | 21,0 | 1,0 | 40,0 | 1,0 | 25,0 | 1,0 |
| Rendement du traitement (%) | Moyenne SO_{X}/NO_{X} | 99,9/99,0 | | 99,8/99,0 | | 99,9/99,0 | |

Les valeurs limites à ne pas dépasser sont de 50 mg eq.SO₂/Nm³ et 100 mg eq.NO₂/Nm³.

Les concentrations des NO_{X} et des SO_{X} après le traitement par le procédé d'invention respectent les normes européennes fixées par l'arrêté du 17/12/19, relatif aux meilleures techniques disponibles (MTD) applicables à certaines installations de traitement de déchets relevant du régime de l'autorisation et de la directive IED. Il s'agit notamment de celles indiquées dans l'Annexe 3.4 - chapitre IX et l'arrêté du 20 septembre 2002, relatif aux installations d'incinération et de co-incinération de déchets non dangereux et aux installations incinérant des déchets d'activités de soins à risques infectieux.

Lors des trois régimes, les performances de traitement des NO_{X} et SO_{X} sont stabilisées avec des taux d'abattement qui atteignent les 98% et 99 %.

### Exemple 4 : Effet du traitement catalytique sur un mélange gazeux à traiter contenant des particules en suspension PM 1, PM2.5 et PM10

Le gaz ou les mélanges gazeux chargés en particulaires en suspension (PM) traités dans cet exemple sont engendrés par une combustion/réactivation de 12 à 15 colonnes, sous une VVH de 70 kh⁻¹, une pression de 800 mbar et une température régularisée entre 320 °C et 350 °C en entrée du procédé.

Le gaz ou les mélanges de gaz de combustion et matière particulaire en suspension (PM) ont été traités avec le procédé de l'invention dans l'installation décrite ci-dessus. L'objectif de cet exemple est de déterminer et prouver l'efficacité/rendement de filtration de la des particules fines (PM) du procédé selon l'invention déjà décrite. Une analyse de la concentration en particules totales est réalisée en amont et en aval du post-traitement au cours des trois régimes de combustion étudiés. L'analyse de la répartition granulométrique (PM10, PM2.5, PM1) en masse a été effectuée dans le but d'estimer la répartition en nombre des particules.

Le prélèvement est réalisé avec l'aide d'un échantillonneur de type impacteur en cascade (Modèle DEKATI - PM10 Impactor). L'impacteur est constitué de trois étages d'impaction pour les particules de diamètre compris entre 10 et 1 µm et d'un filtre en fibre de quartz (Back-up) retenant les particules de diamètre inférieur à 1 µm (jusque 0,3 µm). Des supports en aluminium sont également placés sur les étages supérieurs afin de faciliter l'impaction et la récupération des particules. Le prélèvement de particules est réalisé en amont en en aval du procédé de traitement de l'invention.

**[Tableau 6]**

| PM (mg/Nm³) | Régime 1 | | Régime 2 | | Régime 3 | |
|---|---|---|---|---|---|---|
| | Amont | Aval | Amont | Aval | Amont | Aval |
| PM10 | 3,344 | 0,944 | 1,849 | 0,024 | 82,841 | 2,184 |
| PM2.5 | 3,325 | 0,629 | 1,715 | 0,021 | 81,392 | 1,426 |
| PM1 | 2,972 | 0,291 | 1,704 | 0,021 | 79,478 | 0,862 |
| PM<1 | 2,942 | < 0,06 | 1,485 | 0,019 | 75,186 | < 0,090 |
| Total | 3,340 | 0,94 | 1,85 | 0,024 | 82,840 | 2,180 |
| Rendement du traitement (%) | 95,5 | | 97,75 | | 99,0 | |

La valeur limite à respecter pour respecter la législation en vigueur est de mg/Nm³.

On constate que l'abattement obtenu par la mise en œuvre du procédé de l'invention semble stable et peu influencé au cours des différents régimes. Les régimes 1 et 2 sont caractérisés par des abattements supérieurs à 95,9 % et un traitement efficace des PM<1. L'efficacité de la filtration semble augmenter au cours du régime 2, passant de ~96% à -98%. Les profils granulométriques obtenus en amont et en aval du procédé au cours du régime 3 semblent peu modifiés.

Les émissions mesurées en sortie du procédé de traitement au cours des trois régimes présentent des concentrations nettement inférieures au seuil de 50 mg/Nm³ à 3% d'O₂ visées par l'Arrêté du 20/09/02 relatif aux installations d'incinération et de co-incinération de déchets non dangereux et aux installations incinérant des déchets d'activités de soins à risques infectieux.

### Exemple 5 : Effet du dimensionnement du catalyseur sur le procédé de traitement des gaz

Les mélanges de gaz de combustion traités par l'invention dans l'installation décrite ci-dessus ont été engendrés par combustion des composés adsorbés/absorbés sur de la bauxite et provenant d'une huile minérale. Le mélange gazeux contient de 6 à 21 % d'O₂, 3 à 8 % de CO₂, 0 ou 6 % de H₂O, -20 000 ppm de CO, -10 000 ppmC de COV(NM/M) et du N₂ comme complément.

Dans cet exemple le volume du catalyseur a été changé deux fois dans le but d'analyser le comportement de la vitesse volumique horaire (VVH, exprimée en h⁻¹). Ce dernier paramètre défini comme le rapport du débit de gaz (m³/h) sur le volume de catalyseur (m³) et constitue un paramètre lié au temps de séjour des gaz dans le catalyseur. La VVH permet également d'évaluer la quantité de gaz à traiter et donc le dimensionnement du catalyseur. La température d'entrée des gaz est entre 320°C et 350°C avec une dilution des gaz de 20 à 50 % en volume.

Etant donné qu'il existe plusieurs régimes dans la réaction de combustion qui a lieu dans la colonne de régénération, le débit de gaz sortant de la colonne est donc variable. La variation du débit est proportionnelle à la concentration des composés adsorbés par la bauxite et à la dilution d'air lors des trois régimes décrits ci-dessus. La variation du débit indique que la VVH change régulièrement et que le catalyseur doit être bien dimensionné pour les trois régimes de combustion. Les inventeurs ont déterminé que pour obtenir un bon rendement, il est primordial que la VVH soit entre 20 et 100 kh-1 sous un réchauffage des gaz dilués de 20 à 50 % à une température ≥ 300°C, avec une charge de 0,5 à 4g/l de catalyseur en Pt ou en Pt/Pd. Ceci permet de rester dans des conditions oxydantes.

## Revendications

1. Transformateur électrique du type comportant :
- un circuit de refroidissement dans lequel circule une huile isolante ;
- une unité de régénération de ladite huile qui comprend au moins une colonne de régénération (51 ; 52) remplie d'un matériau adsorbant solide apte à adsorber des composés organiques oxygénés et/ou soufrés contenues dans ladite huile, ladite colonne de régénération (51 ; 52) présentant une entrée et une sortie et comportant des moyens de chauffage dudit matériau adsorbant, lesdits moyens de chauffage étant configuré pour réactiver thermiquement ledit matériau adsorbant en provoquant la combustion des composés organiques oxygénés et/ou soufrés ;
dans lequel ladite unité de régénération comporte, en outre :
- un premier séparateur gaz/liquide (7) monté en sortie de ladite colonne de régénération (51 ; 52) et configuré pour réaliser une séparation liquide/gaz des gaz produits lors de la réactivation dudit matériau adsorbant, ledit premier séparateur gaz/liquide (7) comprenant une sortie gaz et une sortie condensat ;
- un réacteur catalytique (12) contenant au moins un premier catalyseur (C1) apte à oxyder le monoxyde de carbone et les composés organiques volatils et au moins un second catalyseur (C2) apte à réduire les oxydes de soufre et/ou d'azote, la sortie gaz dudit séparateur gaz/liquide (7) étant connectée à une entrée dudit réacteur catalytique (12) en sorte de faire passer lesdits gaz produits dans ledit au moins un premier catalyseur (C1) et dans l'au moins un second catalyseur (C2) ; et
- un filtre à particules (14) dont une entrée est connectée à une sortie dudit réacteur catalytique (12) et une sortie est connectée à l'atmosphère.

2. Transformateur selon la revendication 1, dans lequel l'unité de régénération de l'huile comporte un séparateur gravitaire (9) monté sur la sortie condensat dudit premier séparateur gaz/liquide (7).

3. Transformateur selon l'une quelconque des revendications précédentes, dans lequel ladite unité de régénération de l'huile comporte un deuxième séparateur gaz/liquide, notamment du type filtre à coalescence (71), monté en amont dudit réacteur catalytique (12).

4. Transformateur selon l'une quelconque des revendications précédentes, dans lequel ladite unité de régénération comprend, en outre, un réchauffeur (5) monté en amont dudit réacteur catalytique (12).

5. Transformateur selon l'une quelconque des revendications précédentes, dans lequel ladite unité de régénération comporte, en outre, des moyens d'aspiration (10), montés en amont dudit réacteur catalytique (12) et connectés à la sortie de ladite colonne de régénération (51 ; 52).

6. Transformateur selon l'une quelconque des revendications précédentes, dans lequel ledit au moins un premier catalyseur (C1) et/ou ledit au moins deuxième catalyseur (C2) comporte un support solide et poreux formant un bloc sur lequel est déposé un matériau catalytique contenant un métal du groupe platine, en particulier, du platine, du palladium ou un mélange palladium et platine et/ou en ce que ledit filtre à particule comporte au moins un métal du groupe du platine, notamment du platine ou du palladium ou un mélange palladium et platine.

7. Transformateur selon l'une quelconque des revendications précédentes, dans lequel ladite unité de régénération comporte des moyens d'admission (61) d'un débit réglable d'air ou d'oxygène montés en amont dudit réacteur catalytique (12) et en aval de ladite colonne de régénération (51 ; 52) et/ou montés à l'entrée de ladite colonne de régénération (51 ; 52).

8. Transformateur selon l'une quelconque des revendications précédentes, dans lequel ledit matériau adsorbant est apte à être réactivé thermiquement et est choisi notamment parmi les argiles, la bauxite, la bentonite, l'attapulgite, le kaolin, la montmorillonite de calcium et leurs mélanges.

9. Procédé de régénération de l'huile isolante contenue dans un transformateur électrique sur au moins une colonne contenant un matériau adsorbant selon lequel on réactive thermiquement ledit matériau adsorbant en provoquant la combustion des composés organiques oxygénés et éventuellement soufrés adsorbés sur ledit matériau adsorbant, dans lequel on réalise une séparation liquide/gaz des gaz produits lors de la réactivation dudit matériau adsorbant et en ce qu'ensuite on fait passer lesdits gaz sur au moins un premier catalyseur et sur au moins un second catalyseur de manière à transformer les composés organiques en dioxyde de carbone, oxyder le monoxyde de carbone en dioxyde de carbone et réduire les oxydes d'azote et/ou de soufre formés et l'on filtre ensuite les particules solides contenues dans lesdits gaz.

10. Procédé selon la revendication 9, dans lequel on aspire lesdits gaz en créant une pression supérieure ou égale à 700 mbar et inférieure à la pression atmosphérique avant de les faire passer sur lesdits premier et second catalyseurs.

## Patentansprüche

1. Elektrischer Transformator vom Typ, der Folgendes umfasst:
- einen Kühlkreislauf, in dem Isolieröl zirkuliert;
- eine Regenerationseinheit für das Öl, die mindestens eine Regenerationssäule (51; 52) umfasst, die mit einem festen Adsorptionsmaterial gefüllt ist, das geeignet ist, sauerstoffhaltige und/oder schwefelhaltige organische Verbindungen, die in dem Öl enthalten sind, zu adsorbieren, wobei die Regenerationssäule (51; 52) einen Eingang und einen Ausgang aufweist und Heizmittel für das Adsorptionsmaterial umfasst, wobei die Heizmittel so eingerichtet sind, dass sie das Adsorptionsmaterial thermisch reaktivieren, indem sie die Verbrennung der sauerstoffhaltigen und/oder schwefelhaltigen organischen Verbindungen verursachen;
wobei die Regenerationseinheit ferner umfasst:
- einen ersten Gas-/Flüssigkeitsabscheider (7), der am Ausgang der Regenerationssäule (51; 52) montiert und so eingerichtet ist, dass er eine Flüssig-/Gastrennung der bei der Reaktivierung des Adsorptionsmaterials erzeugten Gase durchführt, wobei der erste Gas-/Flüssigkeitsabscheider (7) einen Gasausgang und einen Kondensatausgang umfasst;
- einen Katalysatorreaktor (12), der mindestens einen ersten Katalysator (C1) enthält, der geeignet ist, Kohlenmonoxid und die flüchtigen organischen Verbindungen zu oxidieren, und mindestens einen zweiten Katalysator (C2), der geeignet ist, die Schwefel- und/oder Stickstoffoxide zu reduzieren, wobei der Gasausgang des Gas-/Flüssigkeitsabscheiders (7) mit einem Eingang des Katalysatorreaktors (12) verbunden ist, sodass die erzeugten Gase durch den mindestens einen ersten Katalysator (C1) und durch den mindestens einen zweiten Katalysator (C2) fließen können; und
- einen Partikelfilter (14), dessen Eingang mit einem Ausgang des Katalysatorreaktors (12) verbunden ist und dessen Ausgang mit der Atmosphäre verbunden ist.

2. Transformator nach Anspruch 1, wobei die Regenerationseinheit für das Öl einen Schwerkraftabscheider (9) umfasst, der am Kondensatausgang des ersten Gas-/Flüssigkeitsabscheiders (7) montiert ist.

3. Transformator nach einem der vorhergehenden Ansprüche, wobei die Regenerationseinheit für das Öl einen zweiten Gas-/Flüssigkeitsabscheider, insbesondere vom Typ Koaleszenzfilter (71), umfasst, der dem Katalysatorreaktor (12) vorgeschaltet ist.

4. Transformator nach einem der vorhergehenden Ansprüche, wobei die Regenerationseinheit ferner einen Erhitzer (5) umfasst, der dem Katalysatorreaktor (12) vorgeschaltet ist.

5. Transformator nach einem der vorhergehenden Ansprüche, wobei die Regenerationseinheit ferner Ansaugmittel (10) umfasst, die dem Katalysatorreaktor (12) vorgeschaltet und mit dem Ausgang der Regenerationssäule (51; 52) verbunden sind.

6. Transformator nach einem der vorhergehenden Ansprüche, wobei der mindestens eine erste Katalysator (C1) und/oder der mindestens zweite Katalysator (C2) einen festen und porösen Träger umfasst, der einen Block bildet, auf dem ein katalytisches Material aufgebracht ist, das ein Metall der Platingruppe, insbesondere Platin, Palladium oder eine Mischung aus Palladium und Platin enthält, und/oder wobei der Partikelfilter mindestens ein Metall der Platingruppe umfasst, insbesondere Platin oder Palladium oder eine Mischung aus Palladium und Platin.

7. Transformator nach einem der vorhergehenden Ansprüche, wobei die Regenerationseinheit Mittel (61) zum Einleiten eines einstellbaren Luft- oder Sauerstoffdurchsatzes umfasst, die dem Katalysatorreaktor (12) vorgeschaltet und der Regenerationssäule (51; 52) nachgeschaltet und/oder am Eingang der Regenerationssäule (51; 52) montiert sind.

8. Transformator nach einem der vorhergehenden Ansprüche, wobei das Adsorptionsmaterial geeignet ist, thermisch reaktiviert zu werden, und insbesondere aus Tonerden, Bauxit, Bentonit, Attapulgit, Kaolin, Calciummontmorillonit und Mischungen davon ausgewählt ist.

9. Verfahren zur Regeneration des in einem elektrischen Transformator enthaltenen Isolieröls an mindestens einer Säule, die ein Adsorptionsmaterial enthält, gemäß dem das Adsorptionsmaterial thermisch reaktiviert wird, indem die Verbrennung der sauerstoffhaltigen und eventuell schwefelhaltigen organischen Verbindungen verursacht wird, die auf dem Adsorptionsmaterial adsorbiert sind, wobei eine Flüssig-/Gastrennung der bei der Reaktivierung des Adsorptionsmaterials erzeugten Gase durchgeführt wird und anschließend die Gase über mindestens einen ersten Katalysator und mindestens einen zweiten Katalysator geleitet werden, um die organischen Verbindungen in Kohlendioxid umzuwandeln, das Kohlenmonoxid in Kohlendioxid zu oxidieren und die gebildeten Stickstoff- und/oder Schwefeloxide zu reduzieren, und anschließend die in den Gasen enthaltenen Feststoffpartikel gefiltert werden.

10. Verfahren nach Anspruch 9, wobei die Gase angesaugt werden, indem ein Druck von mehr als oder gleich 700 mbar und weniger als Atmosphärendruck erzeugt wird, bevor sie über den ersten und zweiten Katalysator geleitet werden.

## Claims

1. An electrical transformer of the type including:
- a cooling circuit in which an insulating oil circulates;
- a unit for regenerating said oil which comprises at least one regeneration column (51; 52) filled with a solid adsorbent material capable of adsorbing oxygen and/or sulphur organic compounds contained in said oil, said regeneration column (51; 52) having an inlet and an outlet and including means for heating said adsorbent material, said heating means being configured to thermally reactivate said adsorbent material by causing the combustion of the oxygen and/or sulphur organic compounds;
wherein said regeneration unit further includes:
- a first gas/liquid separator (7) mounted at the outlet of said regeneration column (51; 52) and configured to perform a liquid/gas separation of the gases produced during the reactivation of said adsorbent material, said first gas/liquid separator (7) comprising a gas outlet and a condensate outlet;
- a catalytic reactor (12) containing at least one first catalyst (C1) capable of oxidising carbon monoxide and volatile organic compounds and at least one second catalyst (C2) capable of reducing sulphur and/or nitrogen oxides, the gas outlet of said gas/liquid separator (7) being connected to an inlet of said catalytic reactor (12) so as to pass said gases produced into said at least one first catalyst (C1) and into the at least one second catalyst (C2); and
- a particle filter (14) an inlet of which is connected to an outlet of said catalytic reactor (12) and an outlet of which is connected to the atmosphere.

2. The transformer according to claim 1, wherein the oil regeneration unit includes a gravity separator (9) mounted to the condensate outlet of said first gas/liquid separator (7).

3. The transformer according to any one of the preceding claims, wherein said oil regeneration unit comprises a second gas/liquid separator, in particular of the coalescing filter (71) type, mounted upstream of said catalytic reactor (12).

4. The transformer according to any one of the preceding claims, wherein said regeneration unit further comprises a heater (5) mounted upstream of said catalytic reactor (12).

5. The transformer according to any one of the preceding claims, wherein said regeneration unit further includes suction means (10), mounted upstream of said catalytic reactor (12) and connected to the outlet of said regeneration column (51; 52).

6. The transformer according to any one of the preceding claims, wherein said at least one first catalyst (C1) and/or said at least one second catalyst (C2) includes a solid porous carrier forming a block onto which a catalytic material containing a metal of the platinum group, in particular platinum, palladium or a palladium and platinum mixture, is deposited and/or in that said particle filter includes at least one metal of the platinum group, in particular platinum or palladium or a palladium and platinum mixture.

7. The transformer according to any one of the preceding claims, wherein said regeneration unit includes intake means (61) with an adjustable flow rate of air or oxygen mounted upstream of said catalytic reactor (12) and downstream of said regeneration column (51; 52) and/or mounted at the inlet of said regeneration column (51; 52).

8. The transformer according to any one of the preceding claims, wherein said adsorbent material is capable of being thermally reactivated and is especially selected from clays, bauxite, bentonite, attapulgite, kaolin, calcium montmorillonite and mixtures thereof.

9. A method for regenerating the insulating oil contained in an electrical transformer on at least one column containing an adsorbent material, wherein said adsorbent material is thermally reactivated by causing the combustion of the oxygen and possibly sulphur organic compounds adsorbed on said adsorbent material, wherein a liquid/gas separation of the gases produced during the reactivation of said adsorbent material is carried out and wherein then said gases are passed over at least one first catalyst and over at least one second catalyst so as to transform the organic compounds into carbon dioxide, oxidise the carbon monoxide to carbon dioxide and reduce the nitrogen and/or sulphur oxides formed and then the solid particles contained in said gases are filtered.

10. The method according to claim 9, wherein said gases are sucked by creating a pressure greater than or equal to 700 mbar and less than atmospheric pressure before passing them over said first and second catalysts.
